# EUROPEAN PATENT SPECIFICATION

(11) **EP 3 043 126 B1**
(45) Date of publication and mention of the grant of the patent: **24.08.2022**
(21) Application number: 16150596.1
(22) Date of filing: 08.01.2016
(51) Int. Cl.: F25B 13/00, F25B 27/02, F25B 47/02

(54) **AIR CONDITIONER AND METHOD FOR CONTROLLING AN AIR CONDITIONER**
KLIMAANLAGE UND VERFAHREN ZUR STEUERUNG EINER KLIMAANLAGE
CLIMATISEUR ET PROCÉDÉ DE COMMANDE D'UN CLIMATISEUR

(30) Priority: 12.01.2015 KR 20150004275
(43) Date of publication of application: 13.07.2016
(73) Proprietor: LG Electronics Inc., Seoul 07336 (KR)
(72) Inventor: JEONG, Hojong, 08592 Seoul (KR); SHIN, Kwangho, 08592 Seoul (KR); CHUNG, Minho, 08592 Seoul (KR); CHOI, Song, 08592 Seoul (KR)
(74) Representative: Vossius & Partner Patentanwälte Rechtsanwälte mbB

(56) References cited:
- EP-A2- 1 202 005
- JP-A- 2002 168 539
- JP-A- 2008 309 383
- JP-A- 2011 075 162

## Description

### BACKGROUND

### 1. Field

An air conditioner and a method for controlling an air conditioner are disclosed herein.

### 2. Background

An air conditioner is an apparatus that cools, warms, or purifies indoor air to provide a more comfortable indoor environment for a user. An air conditioner may be classified as an electric heat pump (EHP) type, which uses electric power or a gas heat pump (GHP) type, which uses a gas fuel, such as liquid petroleum gas (LPG) and liquefied natural gas (LNG), according to a power source for driving a compressor. In a GHP type, an engine is operated by burning a gas fuel, and thus, a compressor is driven.

A conventional EHP type air conditioner is disclosed in Korean Patent Application No.10-2003-0077857, which is hereby incorporated by reference. Such a conventional air conditioner includes a single outdoor unit or device or a combination of a plurality of outdoor units or devices. In the conventional air conditioner in which a plurality of EHP type outdoor units are combined, when an outdoor heat exchanger is covered with frost due to freezing, for example, a warming operation is stopped, and a defrosting operation is performed. Therefore, in the conventional air conditioner, there is a problem in that the warming operation is stopped while the defrosting operation is performed.

JP 2002 168539 A relates to a multiple air conditioner being provided with a plurality of outdoor units. A line connecting these outdoor units in parallel is connected to a line from an indoor unit, and deals with air conditioning load by controlling the number of outdoor units in operation.

JP 2011 075162 A relates to an air conditioner adjustment device being equipped with: a gas branch pipe and a liquid branch pipe connecting an existing EHP-type outdoor unit and an existing GHP-type outdoor unit, and an indoor unit; gas flow rate adjustment valves; and fluid flow rate adjustment valves.

### BRIEF DESCRIPTION OF THE DRAWINGS

Embodiments will be described in detail with reference to the following drawings in which like reference numerals refer to like elements, and wherein:
Fig. 1 is a schematic diagram of an air conditioner according to an embodiment;
Fig. 2 is a schematic diagram illustrating an operation of the air conditioner of FIG. 1;
Fig. 3 is a graph illustrating a two-stage compression cycle of the air conditioner of FIG. 1;
Fig. 4 is a graph illustrating a continuous warming operation of the air conditioner of FIG. 1; and
Fig. 5 is a flowchart of a method for controlling an air conditioner according to an embodiment.

### DETAILED DESCRIPTION

In the following detailed description of embodiments, reference is made to the accompanying drawings that form a part hereof, and in which is shown by way of illustration embodiments which may be practiced. These embodiments are described in sufficient detail to enable those skilled in the art to practice the embodiments, and it is understood that other embodiments may be utilized and that logical structural, mechanical, electrical, and chemical changes may be made without departing from the scope. To avoid detail not necessary to enable those skilled in the art to practice the embodiments, the description may omit certain information known to those skilled in the art. The following detailed description is, therefore, not to be taken in a limiting sense, and the scope is defined only by the appended claims.

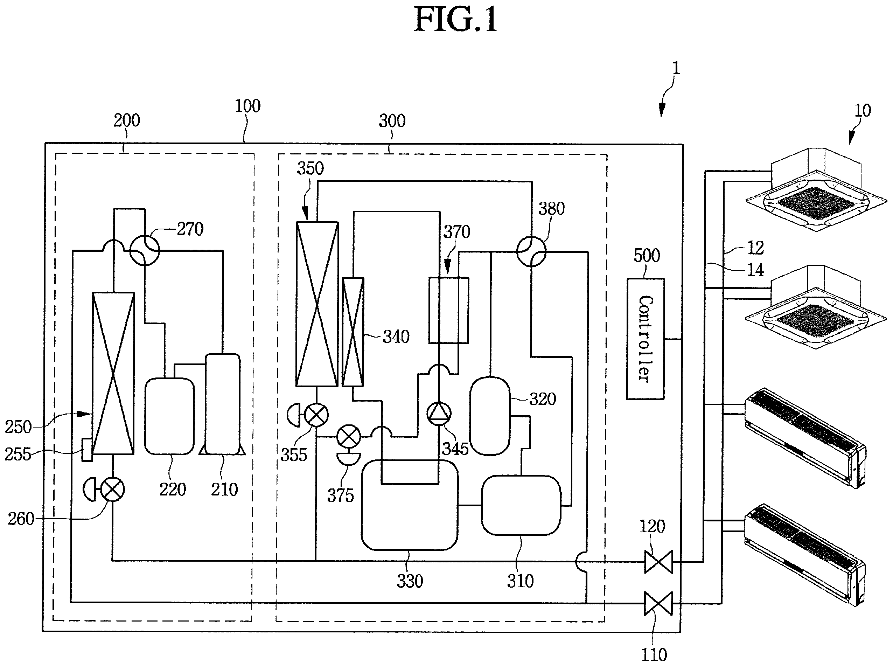

Fig. 1 is a schematic diagram of an air conditioner according to an embodiment. Referring to FIG. 1, the air conditioner 1 may include an indoor unit or device 10 and an outdoor unit or device 100. One or a plurality of indoor units 10 may be provided. The one or more indoor units 10 may be connected with the outdoor unit 100, and may cool, warm, or purify indoor air.

The indoor unit 10 may include a pair of indoor unit pipes 12 and 14 for connection with the outdoor unit 100. The pair of indoor unit pipes 12 and 14 may include a first indoor unit pipe 12 that connects an EHP outdoor unit or device 200 and a GHP outdoor unit or device 300, which will be described hereinafter, and a second indoor unit pipe 14 that connects the EHP outdoor unit 200 and the GHP outdoor unit 300, which will be described hereinafter.

The outdoor unit 100 may be connected with the one or more indoor unit 10, and may perform compressing and expanding, for example, of a refrigerant to allow a sufficient heat exchanging operation of the indoor unit 10. A plurality of outdoor units 100 may be provided. Hereinafter, as an example, an embodiment having one pair of outdoor units 100 will be described.

The outdoor unit 100 may be a combined type including an electric heat pump (EHP) type using electric power and a gas heat pump (GHP) type using a gas fuel, such as LPG and LNG. The outdoor unit 100 may include a first connection valve 110, a second connection valve 120, the EHP outdoor unit 200, the GHP outdoor unit 300, and a controller 500. The first connection valve 110 may be connected with the first indoor unit pipe 12 of the indoor unit 10 to transfer a high pressure refrigerant from the outdoor unit 100 to the indoor unit 10 in a warming operation. The second connection valve 120 may be connected with the second indoor unit pipe 14 of the indoor unit 10 to transfer a low pressure refrigerant from the indoor unit 10 to the outdoor unit 100 in the warming operation.

The EHP outdoor unit 200 may be an outdoor unit operated using an EHP method, and may include a first compressor 210, a first accumulator 220, a first outdoor heat exchanger 250, a temperature sensor 255, a first outdoor heat exchanger control valve 260, and a first four-way valve 270. The first compressor 210 may compress the refrigerant, and may be driven by applying a voltage. When the voltage is applied to the first compressor 210, the first compressor 210 may compress the refrigerant.

The first accumulator 220 may supply the refrigerant to the first compressor 210. When the refrigerant flows backward or is introduced into the first compressor 210 as a liquid, the first compressor 210 may be damaged, and thus, the first accumulator 220 may temporarily store a mixture of oil and the refrigerant.

The first outdoor heat exchanger 250 may evaporate or condense the refrigerant according to a cooling operation or a warming operations of the air conditioner 1. When the air conditioner 1 performs the cooling operation, the refrigerant may be condensed, and when the air conditioner 1 performs the warming operation, the refrigerant may be evaporated.

The temperature sensor 255 may detect a temperature of the first outdoor heat exchanger 250. The temperature sensor 255 may be provided at or in the first outdoor heat exchanger 250. The temperature sensor 255 may be one of various temperature sensors that detect a temperature. The first outdoor heat exchanger control valve 260 may control a flow of the refrigerant to the first outdoor heat exchanger 250. As the first outdoor heat exchanger control valve 260 is well known, detailed description thereof has been omitted.

The first four-way valve 270 may switch a passage of the refrigerant flowing in the EHP outdoor unit 200. According to on/off of electric power, the first four-way valve 270 may be switched to an EHP warming mode, in which the indoor unit 10 may be connected with the first compressor 210 when the EHP outdoor unit 200 performs the warming operation, and an EHP defrosting mode or an EHP cooling mode, in which the first compressor 210 may be connected with the second compressor 310 of the GHP outdoor unit 300, which will be described hereinafter, when the EHP outdoor unit 200 performs the defrosting operation. More specifically, the first four-way valve 270 may be switched to the EHP warming mode when the electric power is supplied, and may be switched to the EHP defrosting mode or the EHP warning mode when the electric power is not supplied.

The GHP outdoor unit 300 may be an outdoor unit operated using a GHP method, and may include a second compressor 310, a second accumulator 320, an engine 330, a cooling water heat exchanger 340, a cooling water pump 345, a second outdoor heat exchanger 350, a second outdoor heat exchanger control valve 355, a waste heat exchanger 370, a waste heat exchanger control valve 375, and a second four-way valve 380. The second compressor 310 may compress the refrigerant, and may be operated through driving of the engine 330, which will be described hereinafter. When a driving force is transmitted to the second compressor 310 by the engine 330, the second compressor 310 may compress the refrigerant, similar to the first compressor 210.

The second accumulator 320 may supply the refrigerant to the second compressor 310. When the refrigerant flows backwards or is introduced into the second compressor 310 as a liquid, the second compressor 310 may be damaged, and thus, the second accumulator 320 may temporarily store the mixture of oil and the refrigerant, similar to the first accumulator 220. The engine 330 may transmit the driving force to the second compressor 310, and may be operated by burning of the gas fuel, such as LPG and LNG. The GHP outdoor unit 300 may be operated using the GHP method using the burned gas from the engine 330.

The cooling water heat exchanger 340 may cool the engine 330. The cooling water heat exchanger 340 may absorb heat of the engine 330 overheated by driving of the engine 330 using cooling water. The cooling water pump 345 may provide a flowing force to the cooling water, and may be connected with the cooling water heat exchanger 340. As the cooling water pump 345 is well known, detailed description thereof has been omitted.

The second outdoor heat exchanger 350 may evaporate or condense the refrigerant through the cooling and warming operations of the air conditioner 1, similar to the first outdoor heat exchanger 250. When the air conditioner 1 performs the cooling operation, the refrigerant may be condensed, and when the air conditioner 1 performs the warming operation, the refrigerant may be evaporated.

The second outdoor heat exchanger control valve 355 may control the flow of the refrigerant to the second outdoor heat exchanger 350. The second outdoor heat exchanger control valve 355 may be opened when the EHP outdoor unit 200 performs the warming operation, and may be closed when the EHP outdoor unit 200 performs the defrosting operation or the cooling operation. The waste heat exchanger 370 may evaporate or condense the refrigerant through the cooling and warming operations of the air conditioner 1, similar to the second outdoor heat exchanger 350. The waste heat exchanger 370 may be a plate type heat exchanger. The waste heat exchanger 370 may evaporate or condense the refrigerant together with the second outdoor heat exchanger 350.

The waste heat exchanger control valve 375 may control the flow of refrigerant to the waste heat exchanger 370. As the waste heat exchanger control valve 375 is well known, detailed description thereof has been omitted. The second four-way valve 380 may switch a passage of the refrigerant flowing in the GHP outdoor unit 300. Similar to the first four-way valve 270, the second four-way valve 380 may be switched to a GHP warming mode when the electric power is supplied, and may be switched to a GHP cooling mode when the electric power is not supplied.

The controller 500 may control an overall operation of the outdoor unit 100, such as the cooling operation, the warming operation, and the defrosting operation of the EHP outdoor unit 200 and the GHP outdoor unit 300. For example, when the EHP outdoor unit 200 performs the defrosting operation, the controller 500 may control the high pressure refrigerant from the second compressor 310 of the GHP outdoor unit 300 to be supplied to the EHP outdoor unit 200.

The controller 500 may perform the defrosting operation of the EHP outdoor unit 200 at a predetermined frosting temperature difference. A temperature difference between an external air temperature and a temperature of the first outdoor heat exchanger 250 may be set as the predetermined frosting temperature difference. The controller 500 may perform the defrosting operation of the EHP outdoor unit 200 when the predetermined frosting temperature difference exceeds about 15 °C. This is only an example, and the predetermined frosting temperature may be changed properly according to design.

During the warming operation of the EHP outdoor unit 200 and the GHP outdoor unit 300, when frosting of the first outdoor heat exchanger 250 of the EHP outdoor unit 200 is detected, the controller 500 may switch the warming operation of the EHP outdoor unit 200 to the defrosting operation thereof. During the defrosting operation of EHP outdoor unit 200, the controller 500 may switch an operation mode of the first four-way valve 270 to the EHP defrosting mode, and may connect the first compressor 210 with the second compressor 310. The switching of the first four-way valve 270 may be performed according to on/off of the electric power supplied to the first four-way valve 270. Further, in the defrosting operation of the EHP outdoor unit 200, the controller 500 may close the second outdoor heat exchanger control valve 355, and open the waste heat exchanger control valve 375.

When a predetermined defrosting completion temperature is reached, the controller 500 may switch the defrosting operation of the EHP outdoor unit 200 to the warming operation thereof. The temperature of the first outdoor heat exchanger 250 may be set as the predetermined defrosting completion temperature. The controller 500 may switch the defrosting operation of the EHP outdoor unit 200 to the warming operation when the predetermined defrosting completion temperature is about 10 °C or more. This is only an example, and the predetermined defrosting completion temperature may be changed properly according to design.

As described above, the controller 500 may control the overall operation of the outdoor unit 100 of the air conditioner 1. Hereinafter, an operation of the air conditioner 1 according to an embodiment will be described.

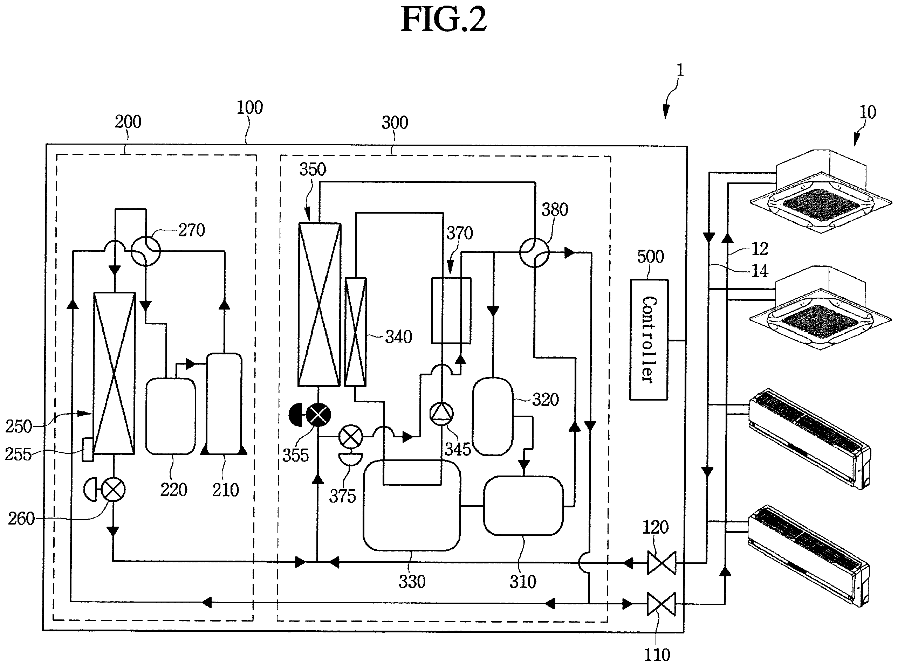

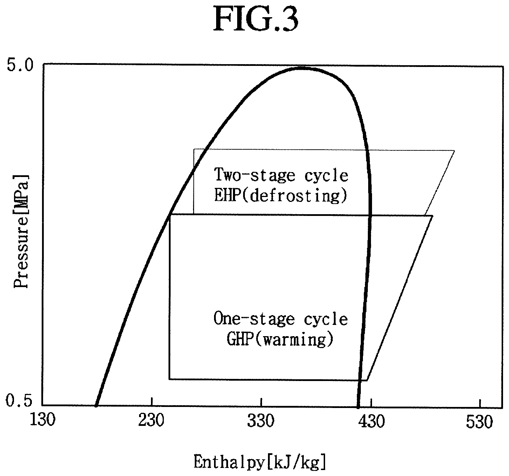

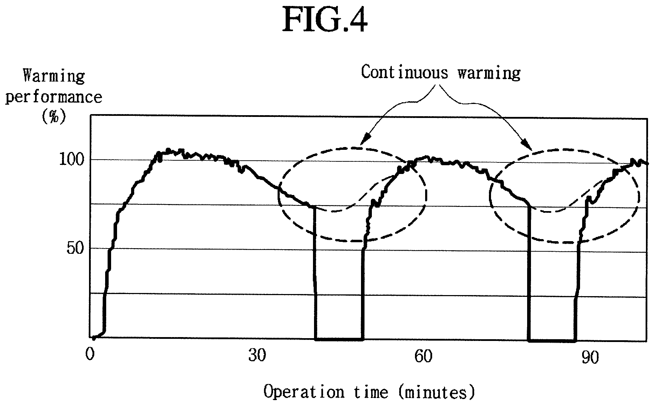

Fig. 2 is a schematic diagram illustrating an operation of the air conditioner of FIG. 1. Fig. 3 is a graph illustrating a two-stage compression cycle of the air conditioner of FIG. 1. Fig. 4 is a graph illustrating a continuous warming operation of the air conditioner of FIG. 1.

Referring to FIGS. 2 to 4, during the warming operation of the air conditioner 1, when frosting of the first outdoor heat exchanger 250 of the EHP outdoor unit 200 due to freezing, for example, is detected, the controller 500 may switch the operation of EHP outdoor unit 200 to the defrosting operation. A frosting detecting temperature difference may be designed as, for example, the above-described temperature difference at which the temperature difference between the external air temperature and the temperature of the first outdoor heat exchanger 250 exceeds about 15 °C. The temperature of the first outdoor heat exchanger 250 may be detected by the temperature sensor 255.

In the defrosting operation of the EHP outdoor unit 200, the controller 500 may cut off the electric power supply to the first four-way valve 270, and may control the first four-way valve 270 to connect the first outdoor heat exchanger 250 with the second outdoor heat exchanger 350. The controller 500 may control the GHP outdoor unit 300 to continuously perform the warming operation, close the second outdoor heat exchanger control valve 355 of the second outdoor heat exchanger 350, and open the waste heat exchanger control valve 375. As described above, the opening and closing of the second outdoor heat exchanger control valve 355 and the waste heat exchanger control valve 375 may be performed automatically.

The flow of the refrigerant may be as follows. The refrigerant compressed by and flowing from the second compressor 310 of the GHP outdoor unit 300 may be branched to the first indoor unit pipe 12 of the indoor unit 10 and the EHP outdoor unit 200 through the second four-way valve 380. The refrigerant branched to the EHP outdoor unit 200 may flow into the first four-way valve 270, the first accumulator 220, and the first compressor 210. The refrigerant flowing into the first compressor 210 may be compressed again by the first compressor 210, and then may flow to the first outdoor heat exchanger 250 through the first four-way valve 270.

That is, as illustrated in FIG. 3, the refrigerant may be compressed in two stages. The refrigerant compressed in two stages may pass through the first outdoor heat exchanger 250, and then may be introduced into the GHP outdoor unit 300. The temperature of the first outdoor heat exchanger 250 may be reduced due to the passing of the refrigerant therethrough. The refrigerant introduced into the GHP outdoor unit 300 may then be introduced again into the second compressor 310 via the opened waste heat exchanger control valve 375, the waste heat exchanger 370, and the second accumulator 320. The refrigerant introduced into the second compressor 310 may be supplied to the indoor unit 10 and the EHP outdoor unit 200, as previously described, and thus may form a circulation cycle.

When the refrigerant is primarily compressed to a predetermined target high pressure completing the defrosting of the first outdoor heat exchanger 250, the controller 500 may control a rotating speed of the second compressor 310. That is, the controller 500 may increase or reduce the rotating speed of the second compressor 310 until the refrigerant reaches the predetermined target high pressure. The predetermined target high pressure may be about 2900 kPa. This is only an example, and the predetermined target high pressure may be properly changed according to design.

When the refrigerant is secondarily compressed, the controller 500 may increase the rotating speed of the first compressor 310. That is, the control unit 500 may increase the rotating speed of the first compressor 310 to complete the defrosting of the first outdoor heat exchanger 250 when the refrigerant is secondarily compressed. When the refrigerant reaches a defrosting temperature of the first outdoor heat exchanger 250 through the circulation circle, the controller 500 may again switch the defrosting operation of the EHP outdoor unit 200 to the warming operation thereof. The defrosting completion temperature may be a temperature at which the temperature of the first outdoor heat exchanger 250 is about 10 °C or more. This is only an example, and the temperature may be changed properly according to design.

When the EHP outdoor unit 200 is switched to the warming operation, the controller 500 may turn on the electric power supply to the first four-way valve 270, and control the first four-way valve 270 to connect the first compressor 210 to the indoor unit 10. Then, the outdoor unit 100 of the air conditioner 1, that is, both of the EHP outdoor unit 200 and the GHP outdoor unit 300 may perform the warming operation.

As described above, in the air conditioner 1 according to an embodiment, when the EHP outdoor unit 200 performs the defrosting operation, the GHP outdoor unit 300 may continuously perform the warming operation through the waste heat exchanger 370 using the waste heat of the engine 330. In the case of the GHP outdoor unit 300, even though the second outdoor heat exchanger 350 may be covered with frost, the defrosting operation may not be required due to the waste heat exchanger 370 using the waste heat of the engine 330. Thus, in the air conditioner 1 according to an embodiment, as illustrated in FIG. 4, even when the EHP outdoor unit 200 performs the defrosting operation, the warming operation may be continuously performed, and thus, the problem in which the warming operation may be stopped due to the defrosting operation may not occur.

As such, in the air conditioner 1 according to an embodiment, even when the outdoor heat exchanger is covered with frost due to freezing while the warming operation is performed, the warming operation may be continuously performed through the GHP outdoor unit 300 provided at a first stage side of a two-stage compression cycle, and thus, warming efficiency may be remarkably enhanced. Further, in the air conditioner 1 according to an embodiment, the two-stage compression cycle may be formed when the EHP outdoor unit 200 performs the defrosting operation, and the EHP outdoor unit 200 side may serve as a high stage side cycle, and thus, a defrosting time may be also reduced.

Hereinafter, a method for controlling an air conditioner according to an embodiment will be described.

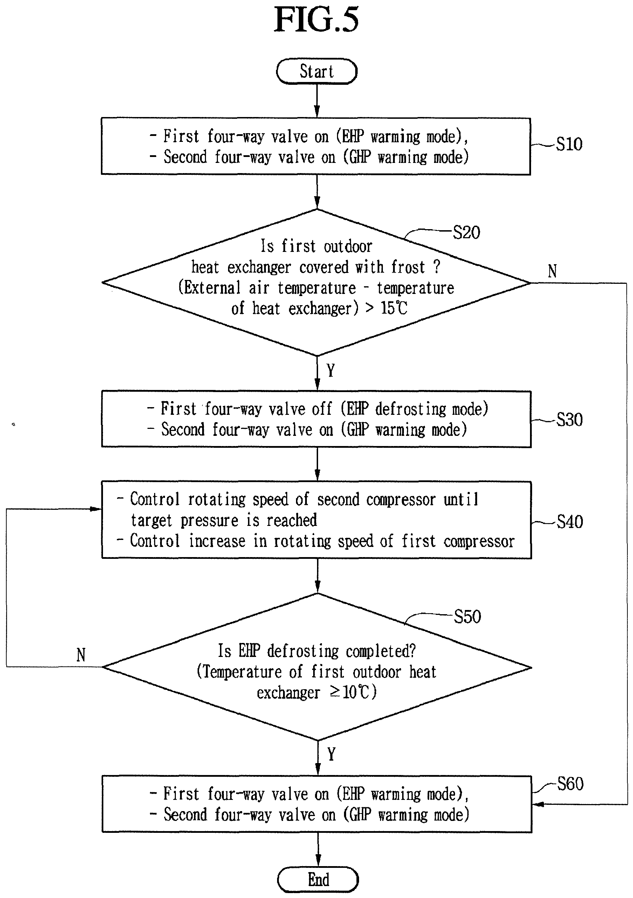

Fig. 5 is a flowchart of a method for controlling an air conditioner according to an embodiment. Referring to FIG. 5, when a warming operation is performed, the air conditioner, such as air conditioner of FIG. 1, may switch on a first four-way valve of an EHP outdoor unit, such as first-four way valve 270 of EHP outdoor unit 200 of FIG. 1, and a second four-way valve of a GHP outdoor unit, such as second four-way valve 380 of EHP outdoor unit 300 of FIG. 1, so that both of the EHP outdoor unit and the GHP outdoor unit may be performed in the warming mode (S10).

Then, the air conditioner may determine whether a first outdoor heat exchanger, such as first outdoor heat exchanger 250 of FIG. 1, is covered with frost (S20). Whether the first outdoor heat exchanger is covered with frost is determined using a difference between an external air temperature and a temperature of the first outdoor heat exchanger. When the temperature difference between the external air temperature and the temperature of the first outdoor heat exchanger exceeds about 15 °C, it may be determined that the first outdoor heat exchanger is covered with the frost.

The air conditioner may switch off the first four-way valve of the EHP outdoor unit and control the EHP outdoor unit to operate in a defrosting mode upon determining that the first outdoor heat exchanger is covered with frost. In a case of the GHP outdoor unit, the air conditioner may maintain a state in which the second four-way valve may be switched on, and thus, allow the GHP outdoor unit to continuously operate in an EHP warming mode (S30). The air conditioner may continuously switch on the first four-way valve of the EHP outdoor unit and the second four-way valve of the GHP outdoor unit and continuously perform the warming operation (S60) upon determining that the first outdoor heat exchanger, such as first outdoor heat exchanger is not covered with the frost.

The air conditioner may control a rotating speed of compressors of an outdoor unit, such as first and second compressors 210, 310 of outdoor unit 100 of FIG. 1, after the EHP outdoor unit is switched to an EHP defrosting mode. More specifically, the air conditioner may control a rotating speed of the second compressor and an increase in the rotating speed of a first compressor until it reaches a target high pressure (S40). As previously described, in an embodiment, the two-stage compression cycle may be formed through this process.

The air conditioner may determine whether defrosting of the EHP outdoor unit is completed through the two-stage cycle operation (S50). Whether the defrosting of the EHP outdoor unit is completed may be determined based on whether the first outdoor heat exchanger reaches the predetermined temperature. In one embodiment, when the temperature of the first outdoor heat exchanger exceeds about 10 °C, it may be determined that the defrosting of the EHP outdoor unit is completed.

The air conditioner may switch on the first four-way valve again, and switch the EHP outdoor unit to be operated in the EHP warming mode when it is determined that the defrosting of the EHP outdoor unit is completed. In a case of the GHP outdoor unit, the air conditioner may continuously maintain a state in which the second four-way valve is switched on (S60). When it is determined that the defrosting of the EHP outdoor unit is not completed, the air conditioner may control the rotating speed of the compressors (S50).

As described above, when the EHP outdoor unit performs the defrosting operation, the air conditioner according to an embodiment may continuously perform the warming operation, and may also remarkably reduce a defrosting operation time of the EHP outdoor unit using waste heat of the GHP outdoor unit.

An air conditioner capable of solving the above-described problem, and a method for controlling an air conditioner is provided according to embodiments disclosed herein.

Embodiments disclosed herein provide an air conditioner that may include at least one indoor unit or device; an EHP outdoor unit or device connected to the at least one indoor unit, configured to drive a first compressor using electric power, and having a first outdoor heat exchanger that performs heat exchange with a refrigerant; a GHP outdoor unit or device connected in parallel with the EHP outdoor unit, connected to the at least one indoor unit, and having an engine configured to drive a second compressor through a burned gas, a second outdoor heat exchanger that performs heat exchange with the refrigerant, and a waste heat exchanger configured to exchange heat with the refrigerant using waste heat of the engine; and a controller configured to control a warming operation or a defrosting operation of the EHP outdoor unit and the GHP outdoor unit, and to supply a high pressure refrigerant from the second compressor of the GHP outdoor unit to the EHP outdoor unit while the EHP outdoor unit performs the defrosting operation.

The controller may switch the EHP outdoor unit to perform the defrosting operation when it is detected that the first outdoor heat exchanger of the EHP outdoor unit is covered with frost while the EHP outdoor unit and the GHP outdoor unit perform the warming operation. The EHP outdoor unit may include a first four-way valve, which may be switched to an EHP warming mode, which connects the first compressor with the at least one indoor unit when the EHP outdoor unit performs the warming operation, and is converted to an EHP defrosting mode, which connects the first compressor with the second compressor of the GHP outdoor unit, when the EHP outdoor unit performs the defrosting operation. When the EHP outdoor unit performs the defrosting operation, the controller may switch the first four-way valve to the EHP defrosting mode, and may supply high pressure refrigerant of the second compressor to the first compressor.

The GHP outdoor unit may include a second outdoor heat exchanger control valve configured to control a flow of the refrigerant flowing into the second outdoor heat exchanger, and a waste heat exchanger control valve configured to control a flow of the refrigerant flowing into the waste heat exchanger. When the EHP outdoor unit performs the defrosting operation, the controller may close the second outdoor heat exchanger control valve, and may open the waste heat exchanger control valve.

A temperature sensor configured to detect a temperature of the first outdoor heat exchanger may be provided at the first outdoor heat exchanger. The controller may perform the defrosting operation of the EHP outdoor unit at a predetermined frosting temperature, and may switch the defrosting operation of the EHP outdoor unit to a warming operation thereof at a predetermined defrosting completion temperature. The predetermined frosting temperature may be a temperature at which a temperature difference between an external air temperature and a temperature of the first outdoor heat exchanger exceeds about 15°C. The predetermined defrosting completion temperature may be a temperature at which the temperature of the first outdoor heat exchanger is about 10°C or more.

Embodiments disclosed herein further provide a control method of an air conditioner that may include at least one indoor unit or device, an EHP outdoor unit or device connected to the at least one indoor unit and configured to drive a first compressor using electric power, and a GHP outdoor unit or device connected in parallel with the EHP outdoor unit, connected to the at least one indoor unit and having an engine used through a burned gas. The control method may include performing a warming operation of the EHP outdoor unit and the GHP outdoor unit; switching the EHP outdoor unit to perform a defrosting operation when the EHP outdoor unit reaches a predetermined frosting temperature; and supplying a high pressure refrigerant of the GHP outdoor unit to the EHP outdoor unit. In the supplying of the high pressure refrigerant of the GHP outdoor unit to the EHP outdoor unit, a two-stage compression cycle in which the high pressure refrigerant of the GHP outdoor unit is compressed by the compressor of the GHP outdoor unit and then compressed by the compressor of the EHP outdoor unit may be formed.

The control method may include switching the EHP outdoor unit to perform a warming operation when the EHP outdoor unit reaches a predetermined defrosting completion temperature. The predetermined frosting temperature may be a temperature at which a temperature difference between an external air temperature and a temperature of the first outdoor heat exchanger exceeds about 15°C. The predetermined defrosting completion temperature may be a temperature at which the temperature of the first outdoor heat exchanger is about 10°C or more.

According to embodiments disclosed herein, when the EHP outdoor unit performs the defrosting operation, the warming operation may be continuously performed, and also the defrosting operation time of the EHP outdoor unit may be remarkably reduced using the waste heat of the GHP outdoor unit.

Even though all elements of embodiments may be coupled into one or operated in the combined state, embodiments are not limited to such embodiments. That is, all the elements may be selectively combined with each other without departing the scope. Further, when it is described that one comprises (or comprises or has) some elements, it should be understood that it may comprise (or include or have) only those elements, or it may comprise (or include or have) other elements as well as those elements if there is no specific limitation. Unless otherwise specifically defined herein, all terms comprising technical or scientific terms are to be given meanings understood by those skilled in the art. Like terms defined in dictionaries, generally used terms needs to be construed as meaning used in technical contexts and are not construed as ideal or excessively formal meanings unless otherwise clearly defined herein.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. An air conditioner, comprising:
at least one indoor device;
an electric heat pump (EHP) outdoor device (200) connected to the at least one indoor device (10), configured to drive a first compressor (210) using electric power, and having a first outdoor heat exchanger (250) that performs heat exchange with a refrigerant;
a gas heat pump (GHP) outdoor device (300) connected in parallel with the EHP outdoor device (200), connected to the at least one indoor device (10), and including an engine (330) configured to drive a second compressor (310) using a burned gas, a second outdoor heat exchanger (350) that performs heat exchange with the refrigerant, and a waste heat exchanger (370) configured to exchange heat with the refrigerant using waste heat of the engine (300); and
a controller (500) configured to control a warming operation or a defrosting operation of the EHP outdoor device (200) and the GHP outdoor device (300), and to supply a high pressure refrigerant from the second compressor (310) of the GHP outdoor device (300) to the EHP outdoor device (200) while the EHP outdoor device (200) performs the defrosting operation,
wherein the EHP outdoor device (200) includes a first four-way valve (270), which is switched to an EHP warming mode during which the first compressor (210) is connected with the at least one indoor device (10) when the EHP outdoor device (200) performs the warming operation, and which is switched to an EHP defrosting mode during which the first compressor (210) is connected with the second compressor (310) when the EHP outdoor device (200) performs the defrosting operation,
the air conditioner being **characterized in that**
the controller (500) is configured to switch the EHP outdoor device (200) to perform the defrosting operation when it is determined that the first outdoor heat exchanger (250) of the EHP outdoor device (200) is covered with frost while the EHP outdoor device (200) and the GHP outdoor device (300) perform the warming operation by supplying the high pressure
refrigerant from the GHP outdoor device to the EHP outdoor device, leading to a two-stage compression cycle in which the high pressure refrigerant from the GHP outdoor device is compressed by the compressor of the GHP outdoor device and then compressed by the compressor of the EHP outdoor device.

2. The air conditioner according to claim 1, wherein when the EHP outdoor device (200) performs the defrosting operation, the controller (500) switches the first four-way valve (270) to the EHP defrosting mode, and supplies the high pressure refrigerant of the second compressor (310) to the first compressor (210).

3. The air conditioner according to claim 1, wherein the GHP outdoor device (300) includes:
an outdoor heat exchanger control valve (355) configured to control a flow of the refrigerant flowing into the second outdoor heat exchanger (350); and
a waste heat exchanger control valve (375) configured to control a flow of the refrigerant flowing into the waste heat exchanger (370).

4. The air conditioner according to claim 3, wherein, when the EHP outdoor device (200) performs the defrosting operation, the controller (500) closes the outdoor heat exchanger control valve (355) of the GHP outdoor device (300), and opens the waste heat exchanger control valve (375).

5. The air conditioner according to any one of claims 1 to 4, further including a temperature sensor (255) provided on the first outdoor heat exchanger (250) and configured to detect a temperature of the first outdoor heat exchanger (250).

6. The air conditioner according to any one of claims 1 to 5, wherein the controller (500) performs the defrosting operation of the EHP outdoor device (200) at a predetermined frosting temperature difference, and switches the defrosting operation of the EHP outdoor device (200) to a warming operation thereof at a predetermined defrosting completion temperature.

7. The air conditioner according to claim 6, wherein the predetermined frosting temperature difference is a temperature difference between an external air temperature and a temperature of the first outdoor heat exchanger (250).

8. The air conditioner according to claim 6, wherein the predetermined defrosting completion temperature is a temperature at which the temperature of the first outdoor heat exchanger (250) is about 10 °C or more.

9. A method for controlling an air conditioner as defined in claim 1 the control method comprising:
performing a warming operation of the EHP outdoor device (200) and the GHP outdoor device (300);
switching the EHP outdoor device (200) to perform a defrosting operation when the EHP outdoor device (200) reaches a predetermined frosting temperature; and
supplying a high pressure refrigerant from the GHP outdoor (300) device to the EHP outdoor device (200),
the control method being **characterized in that** the defrosting operation further comprises
the supplying of the high pressure refrigerant from the GHP outdoor device (300) to the EHP outdoor device (200), a two-stage compression cycle in which the high pressure refrigerant from the GHP outdoor device (300) is compressed by the compressor of the GHP outdoor device (300) and then compressed by the compressor of the EHP outdoor device (200) is formed.

10. The method according to claim 9, further including switching the EHP outdoor device (200) to perform a warming operation when the EHP outdoor device (200) reaches a predetermined defrosting completion temperature.

11. The method according to claim 9 or 10, wherein the predetermined frosting temperature difference is a temperature difference between an external air temperature and a temperature of a first outdoor heat exchanger (250).

12. The method according to claim 10, wherein the predetermined defrosting completion temperature is a temperature at which the temperature of the first outdoor heat exchanger (250) is about 10 °C or more.

## Patentansprüche

1. Klimaanlage, die aufweist:
mindestens eine Innenvorrichtung;
eine Elektrowärmepumpen- (EHP)-Außenvorrichtung (200), die mit der mindestens einen Innenvorrichtung (10) verbunden ist, die konfiguriert ist, einen ersten Verdichter (210) unter Verwendung von elektrischen Strom zu betreiben, und die einen ersten Außenwärmetauscher (250) aufweist, der einen Wärmeaustausch mit einem Kältemittel durchführt;
eine Gaswärmepumpen- (GHP)-Außenvorrichtung (300), die parallel zur EHP-Außenvorrichtung (200) geschaltet und mit der mindestens einen Innenvorrichtung (10) verbunden ist und einen Motor (330) aufweist, der konfiguriert ist, einen zweiten Verdichter (310) unter Verwendung eines Verbrennungsgases zu betreiben, einen zweiten Außenwärmetauscher (350) aufweist, der einen Wärmeaustausch mit dem Kältemittel durchführt, und einen Abwärmetauscher (370) aufweist, der konfiguriert ist, unter Verwendung der Abwärme des Motors (300) Wärme mit dem Kältemittel zu tauschen; und
eine Steuereinheit (500), die konfiguriert ist, einen Erwärmungsbetrieb oder einen Abtaubetrieb der EHP-Außenvorrichtung (200) und der GHP-Außenvorrichtung (300) zu steuern und ein Hochdruckkältemittel vom zweiten Verdichter (310) der GHP-Außenvorrichtung (300) zu der EHP-Außenvorrichtung (200) zuzuführen, während die EHP-Außenvorrichtung (200) den Abtaubetrieb durchführt,
wobei die EHP-Außenvorrichtung (200) ein erstes Vierwegeventil (270) aufweist, das in einen EHP-Erwärmungsmodus geschaltet wird, während dessen der erste Verdichter (210) mit der mindestens einen Innenvorrichtung (10) verbunden ist, wenn die EHP-Außenvorrichtung (200) den Erwärmungsbetrieb durchführt, und das in einen EHP-Abtaumodus geschaltet wird, während dessen der erste Verdichter (210) mit dem zweiten Verdichter (310) verbunden ist, wenn die EHP-Außenvorrichtung (200) den Abtaubetrieb durchführt,
wobei die Klimaanlage **dadurch gekennzeichnet ist, dass**
die Steuereinheit (500) konfiguriert ist, die EHP-Außenvorrichtung (200) umzuschalten, um den Abtaubetrieb durchzuführen, wenn festgestellt wird, dass der erste Außenwärmetauscher (250) der EHP-Außenvorrichtung (200) mit Frost bedeckt ist, während die EHP-Außenvorrichtung (200) und die GHP-Außenvorrichtung (300) den Erwärmungsbetrieb durch Zuführen des Hochdruckkältemittels von der GHP-Außenvorrichtung zur EHP-Außenvorrichtung durchführen, was zu einem zweistufigen Verdichtungszyklus führt, in dem das Hochdruckkältemittel von der GHP-Außenvorrichtung durch den Verdichter der GHP-Außenvorrichtung verdichtet wird und dann durch den Verdichter der EHP-Außenvorrichtung verdichtet wird.

2. Klimaanlage nach Anspruch 1, wobei, wenn die EHP-Außenvorrichtung (200) den Abtaubetrieb durchführt, die Steuereinheit (500) das erste Vierwegeventil (270) in den EHP-Abtaumodus schaltet und das Hochdruckkältemittel des zweiten Verdichters (310) dem ersten Verdichter (210) zuführt.

3. Klimaanlage nach Anspruch 1, wobei die GHP-Außenvorrichtung (300) aufweist:
ein Außenwärmetauscher-Steuerventil (355), das konfiguriert ist, einen Strom des in den zweiten Außenwärmetauscher (350) strömenden Kältemittels zu steuern; und
ein Abwärmetauscher-Steuerventil (375), das konfiguriert ist, einen Strom des in den Abwärmetauscher (370) strömenden Kältemittels zu steuern.

4. Klimaanlage nach Anspruch 3, wobei, wenn die EHP-Außenvorrichtung (200) den Abtaubetrieb durchführt, die Steuereinheit (500) das Außenwärmetauscher-Steuerventil (355) der GHP-Außenvorrichtung (300) schließt und das Abwärmetauscher-Steuerventil (375) öffnet.

5. Klimaanlage nach einem der Ansprüche 1 bis 4, das ferner einen Temperatursensor (255) aufweist, der am ersten Außenwärmetauscher (250) vorgesehen und konfiguriert ist, eine Temperatur des ersten Außenwärmetauschers (250) zu erfassen.

6. Klimaanlage nach einem der Ansprüche 1 bis 5, wobei die Steuereinheit (500) den Abtaubetrieb der EHP-Außenvorrichtung (200) bei einer vorbestimmten Vereisungstemperaturdifferenz durchführt und den Abtaubetrieb der EHP-Außenvorrichtung (200) bei einer vorbestimmten Abtaubeendigungstemperatur auf einen Erwärmungsbetrieb derselben umschaltet.

7. Klimaanlage nach Anspruch 6, wobei die vorbestimmte Vereisungstemperaturdifferenz eine Temperaturdifferenz zwischen einer Außenlufttemperatur und einer Temperatur des ersten Außenwärmetauschers (250) ist.

8. Klimaanlage nach Anspruch 6, wobei die vorbestimmte Abtaubeendigungstemperatur eine Temperatur ist, bei der die Temperatur des ersten Außenwärmetauschers (250) etwa 10°C oder mehr beträgt.

9. Verfahren zum Steuern einer Klimaanlage nach Anspruch 1, wobei das Steuerverfahren folgendes aufweist:
Durchführen eines Erwärmungsbetriebs der EHP-Außenvorrichtung (200) und der GHP-Außenvorrichtung (300);
Umschalten der EHP-Außenvorrichtung (200), um einen Abtaubetrieb durchzuführen, wenn die EHP-Außenvorrichtung (200) eine vorbestimmte Vereisungstemperatur erreicht; und
Zuführen eines Hochdruckkältemittels von der GHP-Außenvorrichtung (300) zur EHP-Außenvorrichtung (200), wobei das Steuerverfahren **dadurch gekennzeichnet ist, dass** der Abtaubetrieb ferner aufweist:
das Zuführen des Hochdruckkältemittels von der GHP-Außenvorrichtung (300) zur EHP-Außenvorrichtung (200), wobei ein zweistufiger Verdichtungszyklus gebildet wird, in dem das Hochdruckkältemittel von der GHP-Außenvorrichtung (300) durch den Verdichter der GHP-Außenvorrichtung (300) verdichtet wird und dann durch den Verdichter der EHP-Außenvorrichtung (200) verdichtet wird.

10. Verfahren nach Anspruch 9, das ferner das Umschalten der EHP-Außenvorrichtung (200) aufweist, um einen Erwärmungsbetrieb durchzuführen, wenn die EHP-Außenvorrichtung (200) eine vorbestimmte Abtaubeendigungstemperatur erreicht.

11. Verfahren nach Anspruch 9 oder 10, wobei die vorbestimmte Vereisungstemperaturdifferenz eine Temperaturdifferenz zwischen einer Außenlufttemperatur und einer Temperatur eines ersten Außenwärmetauschers (250) ist.

12. Verfahren nach Anspruch 10, wobei die vorgegebene Abtaubeendigungstemperatur eine Temperatur ist, bei der die Temperatur des ersten Außenwärmetauschers (250) etwa 10°C oder mehr beträgt.

## Revendications

1. Climatiseur, comprenant :
au moins un dispositif intérieur ;
un dispositif extérieur (200) à pompe à chaleur électrique (EHP) relié audit au moins un dispositif intérieur (10), prévu pour entraîner un premier compresseur (210) au moyen d'un courant électrique, et comportant un premier échangeur de chaleur extérieur (250) réalisant un échange de chaleur avec un réfrigérant ;
un dispositif extérieur (300) à pompe à chaleur à gaz (GHP) connecté en parallèle avec le dispositif extérieur EHP (200), connecté audit au moins un dispositif intérieur (10), et comprenant un moteur (330) prévu pour entraîner un deuxième compresseur (310) au moyen d'un gaz de combustion, un deuxième échangeur de chaleur extérieur (350) réalisant un échange de chaleur avec le réfrigérant, et un échangeur de chaleur perdue (370) prévu pour échanger de la chaleur avec le réfrigérant au moyen de la chaleur résiduelle du moteur (300) ; et
un contrôleur (500) prévu pour commander un processus de chauffage ou un processus de dégivrage du dispositif extérieur EHP (200) et du dispositif extérieur GHP (300), et pour refouler un réfrigérant sous haute pression du deuxième compresseur (310) du dispositif extérieur GHP (300) vers le dispositif extérieur EHP (200) pendant que le dispositif extérieur EHP (200) effectue le processus de dégivrage,
où le dispositif extérieur EHP (200) comprend une première vanne à quatre voies (270), commutée vers un mode de chauffage EHP pendant lequel le premier compresseur (210) est connecté avec ledit au moins un dispositif intérieur (10) quand le dispositif extérieur EHP (200) effectue le processus de chauffage, et commutée vers un mode de dégivrage EHP pendant lequel le premier compresseur (210) est connecté avec le deuxième compresseur (310) quand le dispositif extérieur EHP (200) effectue le processus de dégivrage,
ledit climatiseur étant **caractérisé en ce que**
le contrôleur (500) est prévu pour commuter le dispositif extérieur EHP (200) pour l'exécution du processus de dégivrage s'il est déterminé que le premier échangeur de chaleur extérieur (250) du dispositif extérieur EHP (200) est couvert de givre pendant que le dispositif extérieur EHP (200) et le dispositif extérieur GHP (300) effectuent le processus de chauffage par refoulement du réfrigérant sous haute pression du dispositif extérieur GHP vers le dispositif extérieur EHP, entraînant un cycle de compression à deux phases où le réfrigérant sous haute pression provenant du dispositif extérieur GHP est comprimé par le compresseur du dispositif extérieur GHP, puis par le compresseur du dispositif extérieur EHP.

2. Climatiseur selon la revendication 1, où, lorsque le dispositif extérieur EHP (200) effectue le processus de dégivrage, le contrôleur (500) commute la première vanne à quatre voies (270) vers le mode de dégivrage EHP, et refoule le réfrigérant sous haute pression du deuxième compresseur (310) vers le premier compresseur (210).

3. Climatiseur selon la revendication 1, où le dispositif extérieur GHP (300) comprend :
une vanne de régulation (355) d'échangeur de chaleur extérieur prévue pour commander le débit du réfrigérant circulant dans le deuxième échangeur de chaleur extérieur (350) ; et
une vanne de régulation (375) d'échangeur de chaleur perdue prévue pour commander le débit du réfrigérant circulant dans l'échangeur de chaleur perdue (370).

4. Climatiseur selon la revendication 3, où, lorsque le dispositif extérieur EHP (200) effectue le processus de dégivrage, le contrôleur (500) ferme la vanne de régulation (355) d'échangeur de chaleur extérieur du dispositif extérieur GHP (300), et ouvre la vanne de régulation (375) d'échangeur de chaleur perdue.

5. Climatiseur selon l'une des revendications 1 à 4, comprenant en outre un capteur de température (255) disposé sur le premier échangeur de chaleur extérieur (250) et prévu pour détecter la température du premier échangeur de chaleur extérieur (250).

6. Climatiseur selon l'une des revendications 1 à 5, où le contrôleur (500) effectue le processus de dégivrage du dispositif extérieur EHP (200) pour un différentiel de température de dégivrage prédéfini, et commute le processus de dégivrage du dispositif extérieur EHP (200) vers un processus de chauffage de celui-ci pour une température de fin de dégivrage prédéfinie.

7. Climatiseur selon la revendication 6, où le différentiel de température de dégivrage prédéfini est une différence de température entre la température d'air extérieur et la température du premier échangeur de chaleur extérieur (250).

8. Climatiseur selon la revendication 6, où la température de fin de dégivrage prédéfinie est une température à laquelle la température du premier échangeur de chaleur extérieur (250) est de 10 °C ou plus.

9. Procédé de commande d'un climatiseur selon la revendication 1, ledit procédé de commande comprenant
l'exécution d'un processus de chauffage du dispositif extérieur EHP (200) et du dispositif extérieur GHP (300) ;
la commutation du dispositif extérieur EHP (200) pour l'exécution d'un processus de dégivrage lorsque le dispositif extérieur EHP (200) atteint une température de dégivrage prédéfinie ; et
le refoulement d'un réfrigérant sous haute pression du dispositif extérieur GHP (300) vers le dispositif extérieur EHP (200), ledit procédé de commande étant **caractérisé en ce que** le processus de dégivrage comprend en outre
le refoulement du réfrigérant sous haute pression du dispositif extérieur GHP (300) vers le dispositif extérieur EHP (200), un cycle de compression à deux phases étant formé, où
le réfrigérant sous haute pression provenant du dispositif extérieur GHP (300) est comprimé par le compresseur du dispositif extérieur GHP (300), puis par le compresseur du dispositif extérieur EHP (200).

10. Procédé selon la revendication 9, comprenant en outre la commutation du dispositif extérieur EHP (200) pour l'exécution d'un processus de chauffage lorsque le dispositif extérieur EHP (200) atteint une température de fin de dégivrage prédéfinie.

11. Procédé selon la revendication 9 ou la revendication 10, où le différentiel de température de dégivrage prédéfini est une différence de température entre la température d'air extérieur et la température du premier échangeur de chaleur extérieur (250).

12. Procédé selon la revendication 10, où la température de fin de dégivrage prédéfinie est une température à laquelle la température du premier échangeur de chaleur extérieur (250) est de 10 °C ou plus.
